# EUROPÄISCHE PATENTSCHRIFT

(11) **EP 0 602 256 B1**
(45) Veröffentlichungstag und Bekanntmachung des Hinweises auf die Patenterteilung: **26.07.1995**
(21) Anmeldenummer: 92118542.7
(22) Anmeldetag: 29.10.1992
(51) Int. Cl.: G05B 19/408

(54) **Einrichtung zur Anzeige von Kommentaren bei einer numerischen Steuerung für Werkzeugmaschinen oder Roboter**
Device for display of comments in a numeric control of machine tools or robots
Dispositif d'affichage de commentaire de commande numérique utilisé sur une machine-outil ou sur un robot

(43) Veröffentlichungstag der Anmeldung: 22.06.1994
(73) Patentinhaber: SIEMENS AKTIENGESELLSCHAFT, 80333 München (DE)
(72) Erfinder: Zerbe, Lothar, Dipl.-Ing., O-9701 Chemnitz (DE); Wetzel, Friedrich, Dipl.-Ing. (FH), W-8551 Heroldsbach (DE)

(56) Entgegenhaltungen:
- EP-A- 0 160 099
- EP-A- 0 336 975
- PATENT ABSTRACTS OF JAPAN vol. 016, no. 182 (P-1346)30. April 1992

## Beschreibung

### Einrichtung zur Anzeige von Kommentaren bei einer numerischen Steuerung für Werkzeugmaschinen oder Roboter

Die Erfindung bezieht sich auf eine Einrichtung zur Anzeige von Kommentaren, die jeweils in einem Satzspeicher in Sätzen eines Anwenderprogramms zum Betrieb einer numerischen Steuerung für Werkzeugmaschinen oder Roboter angelegt sind, auf einer Anzeigeeinrichtung, wobei ein erster Dekodierer mit Erkennen eines Kommentarbeginns diesen an ein Kommentarfeld der Anzeigeeinrichtung weiterleitet und wobei mit dem Erkennen des unmittelbar folgenden Kommentarendes bzw. unmittelbar folgenden Satzbeginns der Kommentar im Kommentarfeld über ein Rücksetzsignal rücknehmbar ist.

Bei handelsüblichen numerischen Steuerungen für Werkzeugmaschinen, beispielsweise den SINUMERIK®-Steuerungen der Serie 800 der Siemens AG, ist es üblich, daß Kommentare, die in den einzelnen Sätzen eines Anwenderprogramms abgelegt sind, solange in der Anzeige der numerischen Steuerung erscheinen, wie Zeit vom Beginn des Satzes mit dem Kommentar bis zum Beginn des nächsten Satzes zur Verfügung steht (siehe Oberbegriff von Anspruch 1).

In der Betriebsart "Automatik-Folgesatz", der eigentlichen Betriebsart für die Werkstückbearbeitung, erscheint deshalb der Kommentar nur in der Zeit, die sich aus der in diesem Satz programmierten Wegstrecke der Achsen und der dabei vorliegenden Geschwindigkeit, d.h. während der Bearbeitungszeit, ergibt. Demzufolge wird bei kurzen Wegstrecken und hohen Geschwindigkeiten oder bei Sätzen ohne Weg, sofern es sich dabei nicht um Verweilzeitsätze handelt, der programmierte Kommentar für den Bediener auf der Anzeigeeinrichtung nicht mehr lesbar. Dabei werden dem Bediener nützliche Hinweise und Informationen über den Lauf und den Bearbeitungsstand des technischen Prozesses vorenthalten.

Aufgabe der Erfindung ist es, eine Einrichtung der eingangs genannten Art so auszubilden, daß bedarfsweise eine Verlängerung der Anzeigedauer für Kommentare ermöglicht wird. Dabei sollen jedoch bereits bestehende Teileprogramme weiterhin unverändert lauffähig bleiben.

Gemäß der Erfindung wird diese Aufgabe dadurch gelöst, daß denjenigen in den jeweiligen Sätzen vorliegenden Kommentaren, die bis zum Auftreten eines neuen Kommentars jeweils auf der Anzeigeeinrichtung angezeigt werden sollen, ein diesbezügliches Steuerzeichen im Satzspeicher hinzugefügt ist, daß zwischen den Satzspeicher und die Anzeigeeinrichtung ein Kommentarspeicher geschaltet ist, der mit Kommentarbeginn diesen gegebenenfalls samt Steuerzeichen aufnimmt und den Kommentar der Anzeigeeinrichtung bereitstellt, daß ein zweiter Dekodierer die Satzwechsel erkennt und mit jedem Satzwechsel ein Rücksetzsignal zum Löschen des Inhalts des Kommentarspeichers auslöst, daß dieses Rücksetzsignal jedoch solange unterdrückt wird, bis ein dritter Dekodierer das Vorliegen eines Steuerzeichens im Kommentarspeicher erkennt, sofern nicht vom ersten Dekodierer das Auftreten eines neuen, in den Kommentarspeicher einzuschreibenden Kommentars gemeldet wird.

Eine vorteilhafte Verwendung der Erfindung ist dadurch gegeben, daß in einer numerischen Steuerung mit einer so ausgebildeten Anzeigeeinrichtung Kommentarspeicher und Detektoren integrale Bestandteile der numerischen Steuerung sind. Die Elemente können dabei als Hardware- oder Software-Blöcke ausgebildet sein.

Ein Ausführungsbeispiel der Erfindung ist in der Zeichnung dargestellt und wird im folgenden näher erläutert. Dabei zeigen:
- FIG 1: eine Einrichtung gemäß dem Stand der Technik und
- FIG 2: ein Blockschaltbild der Erfindung.

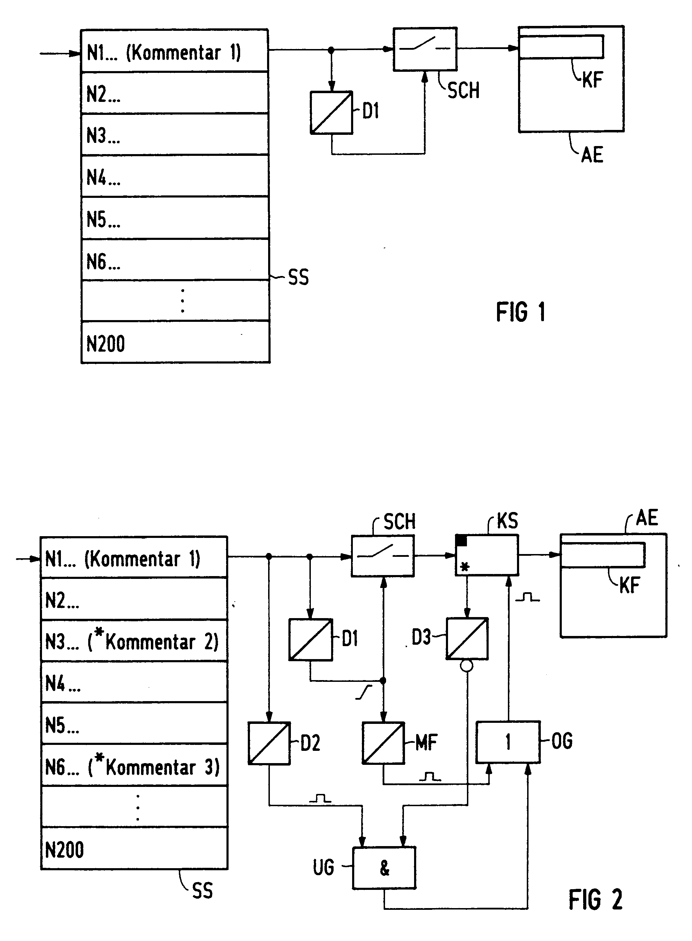

In der Darstellung gemäß FIG 1 ist ein Satzspeicher SS angedeutet, in dem beispielsweise Sätze N1 bis N200 eines Anwenderprogramms abgelegt sind. Diese Sätze werden fortlaufend nacheinander abgearbeitet, wie dies durch einen Pfeil an der linken Seite des Satzspeichers SS angedeutet ist. Im Ausführungsbeispiel steht dieser Zeiger in Höhe des Satzes N1. Dieser Satz möge neben Orts- und Geschwindigkeitsinformationen, die der Übersichtlichkeit halber nicht ausgeführt sind sowie bedarfsweise zugeordneten Hilfeinformationen einen Kommentar K1 beinhalten, der auf einer Anzeigeeinrichtung AE, beispielsweise einem Monitor, in einem Kommentarfeld KF anzuzeigen ist. Damit dieser Kommentar K1 zur Anzeige kommt, ist zwischen Satzspeicher SS und Anzeigeeinrichtung AE eine Anordnung eines Dekodierers D1 und einer Schaltstufe SCH, beispielsweise einer elektronischen Torschaltung, vorgesehen. Der Dekodierer D1 erkennt dabei den Beginn und das Ende des Kommentars. Dazu können die Zeichen "(" und ")" verwendet werden. Wenn also das Zeichen "(" erscheint, schließt der Dekodierer D1 die Schaltstufe SCH und wenn das Zeichen ")" erscheint, öffnet der Dekodierer D1 die Schaltstufe SCH. Demzufolge wird nur während der Dauer des Satzes N1 der Kommentar K1 auf dem Kommentarfeld KF der Anzeigeeinrichtung AE gezeigt. Selbstverständlich wäre es auch möglich, daß als Kommentaranzeige-Endekriterium der Beginn des jeweils unmittelbar folgenden Satzes herangezogen wird.

Die Erfindung, wie sie in Form eines Blockschaltbildes in der Darstellung gemäß FIG 2 gezeigt ist, ermöglicht nun eine weitestgehend verlängerte Kommentaranzeige, wie dies im folgenden näher erläutert wird. Auch hier mögen im Satzspeicher SS die Sätze N1 bis N200 angegeben sein. Allerdings ist hier angenommen, daß im Satz N3 ein Kommentar 2 stehen möge und daß im Satz N6 ein Kommentar 3 stehen möge. Während der Kommentar 1 im Satz N1 in gleicher Weise behandelt werden soll, wie der Kommentar 1 im Satz N1 gemäß FIG 1, so ist für die Kommentare 2 und 3 gewünscht, daß diese möglichst lange auf dem Kommentarfeld KF der Anzeigeeinrichtung AE angezeigt werden.

Dazu ist die in FIG 1 gezeigte Schaltungsanordnung durch Dekodierer D2 und D3, ein Monoflop MF, ein UND-Glied UG und ein ODER-Glied OG sowie einen Kommentarspeicher KS erweitert. Der Kommentarspeicher KS ist dabei in den Pfad zwischen Schaltstufe SCH und Anzeigeeinrichtung AE geschaltet. Die Funktion dieser Schaltung wird im folgenden anhand des Abarbeitens der Sätze N1 bis N6 geschildert.

Wenn der Satz N1 zur Bearbeitung ansteht, wird vom Dekodierer D1 das Auftreten des auf einen Kommentar 1 hinweisenden Zeichens "(" erkannt und die Schaltstufe SCH wird geschlossen. Damit gelangt der Kommentar 1 in den Kommentarspeicher KS. Dort steht er damit der Anzeigeeinrichtung AE für die Anzeige auf dem Kommentarfeld KF zu Verfügung. Wenn das Ende des Kommentars 1 durch das Zeichen ")" erkannt wird, öffnet der Dekodierer D1 die Schaltstufe SCH. Der Kommentar 1 steht dann immer noch im Kommentarspeicher KS. Beim Kommentar K1 möge es sich um einen identischen Kommentar wie in der Darstellung gemäß FIG 1 handelt. Das heißt, in diesem Fall sei erwünscht, daß der Kommentar nur für die Dauer des Satzes N1 angezeigt werden möge. Dazu wird durch den Dekodierer D2 fortlaufend überwacht, ob ein Satzwechsel erfolgt. Wenn also ein Wechsel vom Satz N1 auf den Satz N2 erfolgt, wird am Ausgang des Dekodierers D2 ein kurzzeitiges Signal logisch "1" ausgelöst und dem ersten Eingang das UND-Glied UG zugeleitet. Vom Dekodierer D3 wird ständig im Kommentarspeicher KS abgefragt, ob dort ein projektierbares spezielles Steuerzeichen, z.B. "*", vorliegt, wie es jedem lang festzuhaltenden Kommentar zugeordnet ist. Dem Kommentar 1 ist, wie eingangs erwähnt, kein solches Steuerzeichen "*" zugeordnet. Im Falle eines Nichtvorliegen eines Steuerzeichens "*" wird am Ausgang des Dekodierers D3 ein Signal logisch "1" ausgelöst. Andernfalls steht dort ein Signal logisch "0" an.

Da der Kommentar 1 kein Steuerzeichen "*" beinhaltet hat, setzt sich damit das Ausgangssignal am Dekodierer D2 am Ausgang des UND-Gliedes UG durch, gelangt dann an das ODER-Glied OG und von dort als Rücksetzsignal an den Kommentarspeicher KS, dessen Inhalt demzufolge gelöscht wird. Damit wird auch der Kommentar 1 auf dem Kommentarfeld KF mit Beginn des Satzes N2 nicht mehr angezeigt.

Wenn nun beispielsweise im Satz N3 erneut ein Kommentar, in diesem Fall ein Kommentar K2 vorgegeben wird, der nun jedoch gemäß dem Vorteil der Erfindung solange festgehalten werden soll, bis ein neuer Kommentar erfolgt, geschieht dies folgendermaßen.

Das Zeichen "(" wird vom Dekodierer D1 erkannt, die Schaltstufe SCH wird geschlossen und der Kommentar 2 gelangt in den Kommentarspeicher KS. Dem Kommentar 2 ist jedoch ein Steuerzeichen "*" zugefügt, dieses Steuerzeichen "*" wird vom Dekodierer D3 erkannt und an dessen Ausgang liegt damit ein Signal logisch "0" vor. Dies führt dazu, daß mit dem folgenden Wechsel vom Satz N3 auf Satz N4 zwar der Dekodierer D2 einen Impuls logisch "1" auslöst, daß dieser jedoch über das UND-Glied UG gesperrt wird und damit kein Rücksetzen des Kommentarspeichers KS bewirkt.

Erst dann, wenn ein neuer Kommentar auftaucht, so im Ausführungsbeispiel im Satz N6 ein Kommentar 3, der ebenfalls mit einem Steuerzeichen "*" versehen sein möge, bewirkt das Auftreten des Zeichens "(" zum einen das Schließen der Schaltstufe SCH, zum anderen wird mit dem Auftreten dieses Steuerzeichens "(" über ein Monoflop MF ein Rücksetzimpuls ausgelöst, der sich über das ODER-Glied OG bis zum Kommentarspeicher KS durchschaltet. Vor dem Einschreiben des neuen Kommentars 3 wird also der alte Kommentar 2 gelöscht.

Sofern es sich beim Kommentar 3 um einen mit Steuerzeichen "*" handelt, wird dieser Kommentar dann wieder solange aufrechterhalten, wie nicht durch ein Zeichen "(" ein neuer Kommentar erscheint. Würde es sich beim Kommentar 3 um einen solchen ohne ein Steuerzeichen "*" handeln, würde die Kommentaranzeige auf dem Kommentarfeld KF mit Beginn des nächsten Satzes beendet werden.

## Patentansprüche

1. Einrichtung zur Anzeige von Kommentaren (Kommentar 1, *Kommentar 2, *Kommentar 3), die jeweils in einem Satzspeicher (SS) in Sätzen eines Anwenderprogramms zum Betrieb einer numerischen Steuerung für Werkzeugmaschinen oder Roboter angelegt sind, auf einer Anzeigeeinrichtung (AE), wobei ein erster Dekodierer (D1) mit Erkennen eines Kommentarbeginns diesen an ein Kommentarfeld (KF) der Anzeigeeinrichtung (AE) weiterleitet und wobei mit dem Erkennen des unmittelbar folgenden Kommentarendes bzw. unmittelbar folgenden Satzbeginns der Kommentar (Kommentar 1, *Kommentar 2, *Kommentar 3) im Kommentarfeld (KF) über ein Rücksetzsignal rücknehmbar ist, **dadurch gekennzeichnet**, daß denjenigen in den jeweiligen Sätzen vorliegenden Kommentaren (*Kommentar 2, *Kommentar 3), die bis zum Auftreten eines neuen Kommentars jeweils auf der Anzeigeeinrichtung (AE) angezeigt werden sollen, ein diesbezügliches Steuerzeichen (*) im Satzspeicher (SS) hinzugefügt ist, daß zwischen den Satzspeicher (SS) und die Anzeigeeinrichtung (AE) ein Kommentarspeicher (KS) geschaltet ist, der mit Kommentarbeginn (Kommentar 1, *Kommentar 2, *Kommentar 3) diesen gegebenenfalls samt Steuerzeichen (*) aufnimmt und den Kommentar (Kommentar 1, *Kommentar 2, *Kommentar 3) der Anzeigeeinrichtung (AE) bereitstellt, daß ein zweiter Dekodierer (D2) die Satzwechsel erkennt und mit jedem Satzwechsel ein Rücksetzsignal zum Löschen des Inhalts des Kommentarspeichers (KS) auslöst, daß dieses Rücksetzsignal jedoch solange unterdrückt wird, bis ein dritter Dekodierer (D3) das Vorliegen eines Steuerzeichens (*) im Kommentarspeicher (KS) erkennt, sofern nicht vom ersten Dekodierer (D1) das Auftreten eines neuen, in den Kommentarspeicher (KS) einzuschreibenden Kommentars gemeldet wird.

2. Numerische Steuerung mit einer Einrichtung nach Anspruch 1, **dadurch gekennzeichnet**, daß Kommentarspeicher (KS) und Detektoren (D1,D2,D3) integrale Bestandteile der numerischen Steuerung sind.

## Claims

1. Device for the display, on a display device (AE), of comments (comment 1, *comment 2, *comment 3) which are each set up in a block memory (SS) in blocks of a user program for the operation of a numerical control for machine tools or robots, wherein a first decoder (D1), with recognition of a beginning of a comment, routes the latter to a comment field (KF) of the display device (AE), and wherein with the recognition of the immediately following comment end or immediately following block beginning the comment (comment 1, *comment 2, *comment 3) in the comment field (KF) can be withdrawn by way of a reset signal, characterised in that to those comments (*comment 2, *comment 3), which are present in the respective blocks and in each case are to be displayed on the display device (AE) until the occurrence of a new comment, a relevant control character (*) is added in the block memory (SS), in that connected between the block memory (SS) and the display device (AE) there is a comment memory (KS) which with the beginning of a comment (comment 1, *comment 2, *comment 3) takes up the latter, if applicable, together with control character (*) and holds the comment (comment 1, *comment 2, *comment 3) ready for the display device (AE), in that a second decoder (D2) recognizes the block changes and with each block change triggers a reset signal to clear the content of the comment memory (KS), in that this reset signal, however, is suppressed for so long until a third decoder (D3) recognises the presence of a control character (*) in the comment memory (KS), unless the occurrence of a new comment to be input into the comment memory (KS) is signalled by the first decoder (D1).

2. Numerical control having a device according to claim 1, characterised in that comment memory (KS) and detectors (D1, D2, D3) are integral component parts of the numerical control.

## Revendications

1. Dispositif pour afficher des commentaires (commentaire 1, *commentaire 2, *commentaire 3), qui sont introduits respectivement dans une mémoire d'instructions (SS) dans des instructions d'un programme d'utilisateur pour faire fonctionner une commande numérique pour des machines-outils ou des robots, sur un dispositif d'affichage (AE), un premier décodeur (D1) retransmet, lors de l'identification d'un début de commentaire, ce commentaire à une zone de commentaires (KF) du dispositif d'affichage (AE), lequel lors de l'identification, la fin venant immédiatement ensuite d'un commentaire ou du début venant immédiatement ensutie d'une instruction, le commentaire (commentaire 1, *commentaire 2, *commentaire 3) de la zone de commentaires (KF) pouvant être retiré par l'intermédiaire d'un signal de suppression, caractérisé par le fait qu'aux commentaires (*commentaire 2, *commentaire 3), qui sont présents dans les instructions respectives et qui doivent être affichés respectivement sur le dispositif d'affichage (AE) jusqu'à l'apparition d'un nouveau commentaire, est ajouté un signal de commande (*) relatif à cela dans la mémoire d'instructions (SS), qu'entre la mémoire d'instructions (SS) et le dispositif d'affichage (AE) est branchée une mémoire de commentaires (KS), qui, au début d'un commentaire (commentaire 1, *commentaire 2, *commentaire 3), reçoit ce commentaire éventuellement avec des signes de commande (*), et envoie le commentaire (commentaire 1, *commentaire 2, *commentaire 3) au dispositif d'affichage (AE), qu'un second décodeur (D2) identifie le changement d'instruction et, lors de chaque changement d'instruction, émet un signal de suppression pour effacer le contenu de la mémoire de commentaires (KS), que ce signal de suppression est cependant supprimé tant qu'un troisième décodeur (D3) identifie la présence d'un signe de commande (*) dans la mémoire de commentaires (KS), dans la mesure où le premier décodeur (D1) ne signale pas l'apparition d'un nouveau commentaire devant être enregistré dans la mémoire de commentaires (KS).

2. Commande numérique comportant un dispositif suivant la revendication 1, caractérisé par le fait que la mémoire de commentaires (KS) et les détecteurs (D1,D2,D3) font partie intégrante de la commande numérique.
